# EUROPÄISCHE PATENTSCHRIFT

(11) **EP 3 025 075 B1**
(45) Veröffentlichungstag und Bekanntmachung des Hinweises auf die Patenterteilung: **27.12.2017**
(21) Anmeldenummer: 14735981.4
(22) Anmeldetag: 08.07.2014
(51) Int. Cl.: F16H 61/00

(54) **BETÄTIGUNGSEINRICHTUNG FÜR EIN SCHALTGETRIEBE SOWIE EINE KUPPLUNGSEINHEIT EINES NUTZFAHRZEUGES**
ACTUATING DEVICE FOR A MANUAL TRANSMISSION AND A CLUTCH UNIT OF A UTILITY VEHICLE
DISPOSITIF D'ACTIONNEMENT D'UNE BOÎTE DE VITESSES ET ENSEMBLE EMBRAYAGE D'UN VÉHICULE UTILITAIRE

(30) Priorität: 26.07.2013 DE 102013012402
(43) Veröffentlichungstag der Anmeldung: 01.06.2016
(73) Patentinhaber: KNORR-BREMSE Systeme für Nutzfahrzeuge GmbH, 80809 München (DE)
(72) Erfinder: SCHUDY, Jürgen, 80997 München (DE); GEIS-ESSER, Daniel, 81377 München (DE)
(86) Internationale Anmeldenummer: PCT/EP2014/064501
(87) Internationale Veröffentlichungsnummer: WO 2015/010884

(56) Entgegenhaltungen:
- EP-A1- 2 381 137
- WO-A1-03/029040
- WO-A2-01/51829
- WO-A2-2006/106076

## Beschreibung

Die Erfindung betrifft eine Betätigungseinrichtung für ein Schaltgetriebe mit Kupplungseinheit eines Nutzfahrzeuges, umfassend Getriebestellmittel zum mechanischen Betätigen des Schaltgetriebes und Kupplungsstellemittel zur fluidischen Betätigung der Kupplungseinheit.

Das Einsatzgebiet der Erfindung erstreckt sich vornehmlich auf den Nutzfahrzeugbau. Ein zentrales Merkmal vieler Schaltgetriebe von Nutzfahrzeugen, insbesondere für den Nah- und Verteilerverkehr, Fernverkehr sowie auch für den Überland- und Reisebusverkehr ist die Gruppenbauweise mit einer Vielzahl von Gangstufen. Dieser Aufbau wird bei Nutzfahrzeugen zunehmend für automatische Schaltgetriebe (AMT) verwendet. So existieren beispielsweise automatische 12-Gang-drei-Gruppengetriebe mit PowerShift.

Schaltgetriebe für Nutzfahrzeuge können prinzipiell unterschiedliche Automatisierungsgrade aufweisen. Dabei kann je nach Ausführung der Anfahrvorgang, die Betätigung der Schaltkupplung sowie die Gangwahl automatisiert erfolgen. Bei Handschaltgetrieben ist keine dieser Vorgänge automatisiert, bei teilautomatisierten Schaltgetrieben ist einer dieser Vorgänge automatisiert und bei den hier interessierenden vollautomatischen Schaltgetrieben erfolgen alle Vorgänge automatisiert. Hieraus ergibt sich die Notwendigkeit, geeignete Betätigungseinrichtungen für eine automatisierte Anfahrkupplung, ein automatisiertes Kuppeln beim Schalten sowie eine automatisierte Gangwahl und Motormanagement einzusetzen.

In allgemein bekannter Weise wird die automatisierte Kupplungsbetätigung sowie der automatisierte Gangwechsel durch den Einsatz unterschiedlicher Stellglieder in Form von elektro-pneumatischen, elektro-hydraulischen oder elektro-mechanischen Aktuatoren ermöglicht. Im Rahmen allgemein bekannter automatisierter Schaltgetriebe werden sogenannte Kupplungssteller (KS) und Getriebesteller (GS) eingesetzt, welche in oder am Schaltgetriebe angeordnet sind.

Aus der WO 2011/069526 A1 geht ein Nutzfahrzeuggetriebe hervor, welches in der Bauart eines Doppelkupplungsgetriebes ausgeführt ist. Ein derartiges Getriebekonzept kann zwei räumlich getrennte Getriebesteller in Form von Aktuatoren zur automatisierten Betätigung der im Getriebe integrierten inneren Schaltelemente, wie Schaltstangen, Schaltgabeln, Klauenkupplungen, Synchronisierungen und dergleichen erfordern. Dabei kann hier einer der Getriebesteller auch zur Ansteuerung der Doppelkupplung mittels eines fluidischen Steuermediums dienen. Ferner kann dieser Getriebetyp auch eine zentrale Synchronisierung beinhalten, deren Betätigung ebenfalls durch einen Getriebesteller durchführbar ist. Als fluidisches Steuermedium für diese Aufgabenstellungen kommen hier im Wesentlichen Druckluft oder Hydrauliköl in Betracht.

Die räumliche Trennung der verschiedenen Getriebesteller sowie die zugeordnete elektronische Getriebesteuerung erfordert einen entsprechend großen Bauraum am Getriebe-und/ oder Kupplungsgehäuse sowie einen entsprechenden Montageaufwand, insbesondere für die Druckleitungsanbindung.

Aus der WO2006/106076 A2 geht eine gattungsgemäße Betätigungseinrichtung für ein Schaltgetriebe hervor. Diese umfasst ein gemeinsames Trägergehäuse, welches zum einen mehrere Stellzylinder als Getriebestellmittel des hieran angeschlossenen Schaltgetriebes sowie Druckluftanschlüsse zur Betätigung einer ebenfalls hieran angeschlossenen Kupplungseinheit. Mit dieser technischen Ausstattung ist die Anwendbarkeit dieser technischen Lösung jedoch nur auf bestimmte Schaltgetriebe beschränkt.

Es ist daher die Aufgabe der vorliegenden Erfindung eine kompakt bauende Betätigungseinrichtung für ein automatisiertes Schaltgetriebe mit mindestens einer Kupplungseinheit zu schaffen, welches sich in einfacher Weise platzsparend im oder am Getriebegehäuse montieren lässt.

Die Aufgabe wird ausgehend von einer Betätigungseinrichtung gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass in einem gemeinsamen Trägergehäuse einer modularen Betätigungseinrichtung mindestens zwei Stellzylinder als Getriebestellmittel zur Betätigung eines hiermit gekoppelten Schaltgetriebes sowie mindestens ein Druckluftanschluss als Kupplungsstellmittel zur Betätigung einer hiermit verbundenen Kupplungseinheit funktionsintegriert angeordnet sind.

Der Vorteil der erfindungsgemäßen Lösung liegt insbesondere darin, dass innerhalb des gemeinsamen Trägergehäuses einer insoweit kompaktbauenden Betätigungseinrichtung alle Unterfunktionseinheiten zur Betätigung des Schaltgetriebes sowie der mindestens einen hiermit in Verbindung stehenden Kupplungseinheit untergebracht sind und über entsprechende fluidische, mechanische und elektrische Schnittstellen in einen automatisierten Antriebsstrang eines Nutzfahrzeuges integriert werden können. Die erfindungsgemäße Betätigungseinrichtung lässt sich durch die hohe Integration von Funktionen und die hieraus resultierende platzsparende Ausführung sowohl in als auch an einem Getriebe- oder Kupplungsgehäuse montieren. Die Betätigungseinrichtung lässt sich somit als ein Modul darstellen, welches separat als geschlossene Einheit montiert und ausgetauscht werden kann.

Gemäß einer bevorzugten Ausführungsform der Erfindung sind die Stellzylinder zur mechanischen Betätigung des Schaltgetriebes achsparallel beabstandet zueinander im Trägergehäuse angeordnet. Über die Stellzylinder werden die Schaltmechanismen im automatisierten Getriebe mechanisch betätigt, wofür entsprechende Koppelstellen am Schaltgetriebe vorgesehen sind.

Vorzugsweise ist im Trägergehäuse neben den beiden vorstehend genannten Stellzylindern mindestens ein weiterer Stellzylinder angeordnet, welcher zur Synchronisierung von Getriebekomponenten eingesetzt werden kann. Die Achse dieses zusätzlichen Stellzylinders kann aus Bauraumgründen zur Wirkachse eines hiermit im Getriebe korrespondierenden Schaltelements parallel verschoben sein. Im genannten Fall werden beide Achsen vorzugsweise mit mechanischen Kopplungsmitteln verbunden.

Um die im Trägergehäuse integrierten Stellzylinder pneumatisch mit Druckluft anzusteuern, umfasst das Trägergehäuse vorzugsweise diesen zugeordnete Wegeventile.

Gemäß der bevorzugten Ausführungsform umfasst das Trägergehäuse neben dem einen Druckluftanschluss als Kupplungsstellmittel zur Betätigung der hiermit verbundenen Kupplungseinheit einen weiteren Druckluftanschluss, um beispielsweise eine weitere Kupplungseinheit eines automatisierten Schaltgetriebes zu betätigen. Dabei können die genannten Druckluftanschlüsse jeweils wiederum vorzugsweise in eine Belüftungs- und eine Entlüftungsöffnung aufgeteilt sein.

Zur Druckluftsteuerung sind im Trägergehäuse vorzugsweise mehrere integrierte Wegeventile vorgesehen, deren Arbeitsanschluss an einem zugeordneten Druckluftanschluss mündet.

Die funktionsintegrierte Betätigungseinrichtung umfasst ferner eine vorzugsweise bodenseitig des Trägergehäuses angeordnete Elektronikeinheit, welche als elektrische Schnittstelle zur externen Getriebe- und Kupplungssteuerung des Schaltgetriebes dient. An der Elektronikeinheit ist ein elektrischer Kabelstrang anschließbar.

Das Trägergehäuse der Betätigungseinrichtung ist vorzugsweise als ein geteiltes Druckgussbauteil ausgeführt, in welchem pneumatische Kanäle zur Druckluftleitung integriert ausgeformt sind. Insoweit werden zusätzliche pneumatische Verbindungsleitungen innerhalb des Trägergehäuses vermieden. Das insoweit funktionsintegrierte Trägergehäuse kann ferner auch Zylinderausnehmungen für die Stellzylinder und Ventilgehäusefunktionen übernehmen. Im Trägergehäuse werden alle mechanischen und pneumatischen Kräfte abgestützt. Die resultierenden Reaktionskräfte werden über entsprechend vordefinierte Verbindungsstellen am Schaltgetriebe abgestützt.

Das Trägergehäuse besteht vorzugsweise aus einem Grundgehäuse, welches mit einem lösbar hieran durch Schrauben befestigten Deckel verschließbar ist und mit einer Oberflächenbeschichtung versehen werden kann. Ferner kann das Trägergehäuse auch Wegsensoren zur Positionsbestimmung der Stellkolben enthalten, welche an der Elektronikeinheit zur Auswertung der Sensorsignale anschließbar sind. Die Elektronikeinheit dient vornehmlich der Ansteuerung der im Trägergehäuse integrierten Wegeventile. Die hierfür notwendigen Steuersignale werden über den elektrischen Kabelstrang von einer übergeordneten Kontrolleinheit, vorzugsweise in Form eines externen Getriebe- und Kupplungssteuerungsmoduls, bereitgestellt.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Darstellung des Teils eines Antriebsstrangs eines Nutzfahrzeuges mit einer modularen Betätigungseinrichtung für ein Schaltgetriebe mit Kupplungseinheit gemäß der vorliegenden Erfindung, und
- Figur 2: eine schematische Darstellung der modulartigen Betätigungseinrichtung.

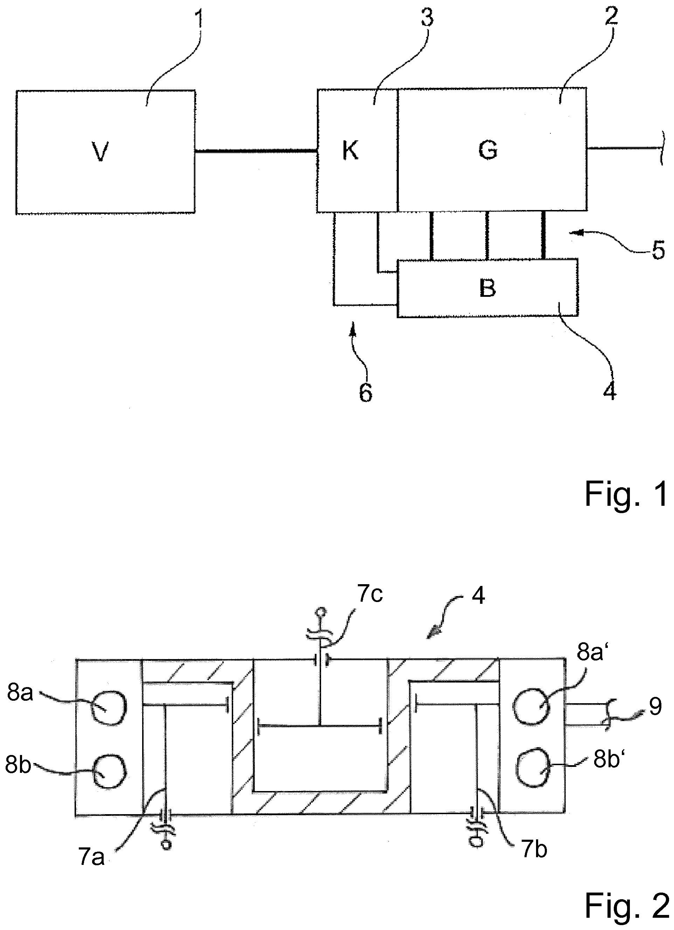

Gemäß Figur 1 umfasst der hier teilweise dargestellte Antriebsstrang eines Nutzfahrzeuges einen Verbrennungsmotor 1, welchem ein Schaltgetriebe 2 mit einer Kupplungseinheit 3 nachgeschaltet ist. Eine in einem modulartigen Trägergehäuse 4 untergebrachte Betätigungseinrichtung ist mit Getriebestellmitteln zum mechanischen Betätigen des Schaltgetriebes 2 über mechanische Kopplungsmittel 5 sowie Kupplungsstellmitteln zur pneumatischen Betätigung der Kupplungseinheit 3 über pneumatische Verbindungsleitungen 6 ausgestattet.

Nach Figur 2 sind in einem als Druckgussbauteil ausgebildeten Trägergehäuse 4 zwei symmetrisch hierin angeordnete Stellzylinder 7a, 7b als Getriebestellmittel zur Betätigung des - hier nicht dargestellten - Schaltgetriebes 2 angeordnet. Außerdem sind an Trägergehäuse 4 zwei paar Druckluftanschlüsse 8a, 8b bzw. 8a', 8b' angeordnet, welche als Kupplungsstellmittel zur Betätigung der hiermit verbundenen - hier nicht dargestellten - Kupplungseinheit 3 dienen.

Ferner ist im Trägergehäuse 4 ein weiterer als Synchronisierzylinder für das Schaltgetriebe 2 dienende Stellzylinder 7c angeordnet, dessen Achse zur Wirkachse eines zu betätigenden Schaltelements des Schaltgetriebes 2 parallel verschoben ist. Der hier insoweit dritte Stellzylinder 7c ist zwischen den beiden anderen Stellzylindern 7a und 7b angeordnet.

Zur Ansteuerung der drei Stellzylinder 7a-7c werden insgesamt fünf im Bodenteil des Trägergehäuses 4 integrierte 3/2-Wegeventile genutzt - welche hier nicht dargestellt sind -. Ferner werden zur Ansteuerung der beiden Kupplungseinheiten 3 insgesamt neun im Trägergehäuse 4 integrierte 2/2-Wegeventile genutzt - welche hier nicht dargestellt sind -.

Darüber hinaus ist im Bodenteil auch eine - hier nicht dargestellte - Elektronikeinheit als elektrische Schnittstelle zur externen Getriebe- und Kupplungsansteuerung angeordnet, an welche der elektrische Kabelstrang 9 angeschlossen ist. Sämtliche pneumatische Kanäle zur Druckluftleitung sind innerhalb des Trägergehäuses 4 integriert ausgeformt.
Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, eine andere Anzahl von Stellzylindern als Getriebestellmittel oder Druckluftanschlüsse als Kupplungsanschlüsse innerhalb der funktionsintegrierten Betätigungseinrichtung anzuordnen. Die geometrischen Abmessungen der modularen Betätigungseinrichtung richten sich nach den geometrischen Abmessungen der Schnittstellen zum Schaltgetriebe hin.

### Bezugszeichenliste

- 1: Verbrennungsmotor
- 2: Schaltgetriebe
- 3: Kupplungseinheit
- 4: Trägergehäuse
- 5: Koppelmittel
- 6: Verbindungsleitungen
- 7a, 7b, 7c: Stellzylinder
- 8a, 8a', 8b, 8b': Druckluftanschluss
- 9: Kabelstrang

## Patentansprüche

1. Betätigungseinrichtung für ein Schaltgetriebe (2) mit mindestens einer Kupplungseinheit (3) eines Nutzfahrzeuges, mit Getriebestellmitteln zum mechanischen Betätigen des Schaltgetriebes (2) und Kupplungsstellmitteln zur fluidischen Betätigung der Kupplungseinheit (3), wobei in einem gemeinsamen Trägergehäuse (4) mindestens zwei Stellzylinder (7a, 7b) als Getriebestellmittel zur Betätigung des hiermit gekoppelten Schaltgetriebes (2) sowie mindestens ein Druckluftanschluss (8a; 8b; 8a'; 8b') als Kupplungsstellmittel zur Betätigung der hiermit verbundenen Kupplungseinheit (3) angeordnet sind,
**dadurch gekennzeichnet, dass** mindestens ein weiterer als Synchronisierzylinder für das Schaltgetriebe (2) dienender Stellzylinder (7c) neben den als Getriebestellmittel dienenden mindestens zwei Stellzylindern (7a, 7b) im Trägergehäuse (4) angeordnet ist, dessen Achse zur Wirkachse eines zu betätigenden Schaltelements des Schaltgetriebes (2) parallel verschoben ist, wobei beide Achsen mit mechanischen Kopplungsmitteln verbunden sind.

2. Betätigungseinrichtung nach Anspruch 1,
**dadurch gekennzeichnet, dass** die beiden Stellzylinder (7a, 7b) zur Betätigung des Schaltgetriebes achsparallel beabstandet zueinander im Trägergehäuse (4) angeordnet sind.

3. Betätigungseinrichtung nach Anspruch 1,
**dadurch gekennzeichnet, dass** mehrere im Trägergehäuse (4) integrierte Wegeventile zur Ansteuerung der mindestens zwei Stellzylinder (7a - 7c) vorgesehen sind.

4. Betätigungseinrichtung nach Anspruch 1,
**dadurch gekennzeichnet, dass** am Trägergehäuse (4) mindestens ein weiterer Druckluftanschluss (8a; 8b; 8a'; 8b') zur Betätigung einer hiermit verbundenen weiteren Kupplungseinheit (3) vorgesehen ist.

5. Betätigungseinrichtung nach Anspruch 1,
**dadurch gekennzeichnet, dass** die mindestens eine Kupplungseinheit (3) als eine Anfahrkupplung ausgebildet ist.

6. Betätigungseinrichtung nach Anspruch 1,
**dadurch gekennzeichnet, dass** von den beiden Druckluftanschlüssen (8a; 8b; 8a'; 8b') ein Druckluftanschluss (8a; 8a') zur Belüftung und ein Druckluftanschluss (8b; 8b') zur Entlüftung der pneumatisch betätigten Kupplungseinheit (3) vorgesehen ist.

7. Betätigungseinrichtung nach Anspruch 1,
**dadurch gekennzeichnet, dass** mehrere im Trägergehäuse (4) integrierte Wegeventile zur Druckluftsteuerung der Druckluftanschlüsse (8a, 8b; 8a', 8b') vorgesehen sind.

8. Betätigungseinrichtung nach einem der vorstehenden Ansprüche,
**dadurch gekennzeichnet, dass** in einem Bodenteil des Trägergehäuses (4) eine Elektronikeinheit als elektrische Schnittstelle zur externen Getriebe- und Kupplungssteuerung angeordnet ist, an welche ein elektrischer Kabelstrang (9) anschließbar ist.

9. Betätigungseinrichtung nach einem der vorstehenden Ansprüche,
**dadurch gekennzeichnet, dass** das Trägergehäuse (4) als ein geteiltes Druckgussbauteil ausgeführt ist, in welchem pneumatische Kanäle zur Druckluftleitung integriert ausgeformt sind.

## Claims

1. Actuating device for a manual transmission (2) with at least one clutch unit (3) of a commercial vehicle, having transmission control means for mechanical actuation of the manual transmission (2) and clutch control means for actuation of the clutch unit (3) by a fluid medium, wherein at least two operating cylinders (7a, 7b) serving as transmission control means for actuating the manual transmission (2) coupled thereto, together with at least one compressed air connection (8a; 8b; 8a'; 8b') serving as clutch control means for actuating the clutch unit (3) connected thereto, are arranged in a common carrier housing (4), **characterized in that,** in addition to the at least two operating cylinders (7a, 7b) serving as transmission control means, at least one further operating cylinder (7c), which serves as synchronizing cylinder for the manual transmission (2) and the axis of which is offset parallel to the effective axis of a gearshift element of the manual transmission (2) to be actuated, is arranged in the carrier housing (4), wherein both axes are connected to mechanical coupling means.

2. Actuating device according to Claim 1, **characterized in that** the two operating cylinders (7a, 7b) for actuation of the manual transmission are arranged axially parallel at distance from one another in the carrier housing (4).

3. Actuating device according to Claim 1, **characterized in that** multiple directional control valves integrated in the carrier housing (4) are provided for controlling at least the two operating cylinders (7a - 7c).

4. Actuating device according to Claim 1, **characterized in that** at least one further compressed air connection (8a; 8b; 8a'; 8b') for actuating a further clutch unit (3) connected thereto is provided on the carrier housing (4).

5. Actuating device according to Claim 1, **characterized in that** at least the one clutch unit (3) is embodied as a driveaway clutch.

6. Actuating device according to Claim 1, **characterized in that** of the two compressed air connections (8a; 8b; 8a'; 8b') one compressed air connection (8a; 8a') is provided for ventilating and one compressed air connection (8b; 8b') for venting the pneumatically actuated clutch unit (3).

7. Actuating device according to Claim 1, **characterized in that** multiple directional control valves integrated in the carrier housing (4) are provided for compressed air control of the compressed air connections (8a; 8b; 8a'; 8b').

8. Actuating device according to one of the preceding claims, **characterized in that** an electronic unit serving as electrical interface for the external transmission and clutch control, to which unit an electrical wiring harness (9) can be connected, is arranged in a base part of the carrier housing (4).

9. Actuating device according to one of the preceding claims, **characterized in that** the carrier housing (4) is designed as a divided diecast component, in which pneumatic ducts for ducting compressed air are integrally formed.

## Revendications

1. Dispositif d'actionnement d'une boîte (2) de vitesse ayant au moins une unité (3) d'embrayage d'un véhicule utilitaire, comprenant des moyens de réglage de boîte de vitesse pour actionner mécaniquement la boîte (2) de vitesse et des moyens de réglage d'embrayage pour l'actionnement fluidique de l'unité (3) d'embrayage, dans lequel, dans une enveloppe (4) commune de support, sont disposés au moins deux cylindres (7a, 7b) de réglage comme moyens de réglage de boîte de vitesse pour l'actionnement de la boîte (2) de vitesse, qui y est couplée, ainsi qu'au moins un raccord (8a; 8b; 8a'; 8b') pour de l'air comprimé comme moyens de réglage d'embrayage pour l'actionnement de l'unité (3) d'embrayage, qui y est reliée,
**caractérisé en ce qu'**au moins un autre cylindre (7c) de réglage servant de cylindre de synchronisation pour la boîte (2) de vitesse est monté à côté des au moins deux cylindres (7a, 7b) de réglage servant de moyens de réglage de boîte de vitesse dans la boîte (4) de support, dont l'axe est décalé parallèlement à l'axe actif d'un élément de manoeuvre à actionner de la boîte (2) de vitesse, les deux axes étant reliés par des moyens d'accouplement mécanique.

2. Dispositif d'actionnement suivant la revendication 1,
**caractérisé en ce que** les deux cylindres (7a, 7b) de réglage sont montés à distance l'un de l'autre dans la boîte (4) de support en étant parallèles à l'axe pour l'actionnement de la boîte de vitesse.

3. Dispositif d'actionnement suivant la revendication 1,
**caractérisé en ce qu'**il est prévu plusieurs distributeurs intégrés à la boîte (4) de support pour commander les au moins deux cylindres (7a à 7c) de réglage.

4. Dispositif d'actionnement suivant la revendication 1,
**caractérisé en ce qu'**il est prévu, sur la boîte (4) de support, au moins un autre raccord (8a; 8b; 8a'; 8b') pour de l'air comprimé, afin d'actionner une autre unité (3) d'embrayage, qui y est reliée.

5. Dispositif d'actionnement suivant la revendication 1,
**caractérisé en ce que** la au moins une unité (3) d'embrayage est constituée sous la forme d'un embrayage de démarrage.

6. Dispositif d'actionnement suivant la revendication 1,
**caractérisé en ce que**, parmi les deux raccords (8a; 8b; 8a'; 8b') pour de l'air comprimé, un raccord (8a; 8a') pour de l'air comprimé est prévu pour l'alimentation en air et un raccord (8b; 8b') pour de l'air comprimé est prévu pour la purge de l'unité (3) d'embrayage à actionnement pneumatique.

7. Dispositif d'actionnement suivant la revendication 1,
**caractérisé en ce qu'**il est prévu plusieurs distributeurs intégrés dans la boîte (4) de support pour régler l'air comprimé des raccords (8a; 8b; 8a'; 8b') pour de l'air comprimé.

8. Dispositif d'actionnement suivant l'une des revendications précédentes,
**caractérisé en ce que**, dans une partie de fond de la boîte (4) de support, est disposée une unité électronique comme interface électrique à la commande extérieure de boîte de vitesse et d'embrayage, unité électronique à laquelle peut être raccordé un faisceau (9) de câble électrique.

9. Dispositif d'actionnement suivant l'une des revendications précédentes,
**caractérisé en ce que** la boîte (4) de support est réalisée sous la forme d'une pièce coulée sous pression, dans laquelle sont formés, de manière intégrée, des conduits pneumatiques pour conduire de l'air comprimé.
